# EUROPÄISCHE PATENTSCHRIFT

(11) **EP 3 172 549 B1**
(45) Veröffentlichungstag und Bekanntmachung des Hinweises auf die Patenterteilung: **17.10.2018**
(21) Anmeldenummer: 15741972.2
(22) Anmeldetag: 17.07.2015
(51) Int. Cl.: B60T 17/22, G01M 3/24

(54) **VERFAHREN UND SYSTEM ZUR IDENTIFIKATION EINER LECKAGE IN EINEM DRUCKLUFTSYSTEM, INSBESONDERE IN EINEM PNEUMATISCHEN BREMSSYSTEM EINES FAHRZEUGES**
METHOD AND SYSTEM FOR IDENTIFYING A LEAKAGE IN A COMPRESSED-AIR SYSTEM, IN PARTICULAR IN A PNEUMATIC BRAKE SYSTEM OF A VEHICLE
PROCÉDÉ ET SYSTÈME PERMETTANT D'IDENTIFIER UNE FUITE DANS UN SYSTÈME À AIR COMPRIMÉ D'UN VÉHICULE, EN PARTICULIER DANS UN SYSTÈME DE FREINAGE PNEUMATIQUE D'UN VÉHICULE

(30) Priorität: 21.07.2014 DE 102014010624
(43) Veröffentlichungstag der Anmeldung: 31.05.2017
(73) Patentinhaber: KNORR-BREMSE Systeme für Nutzfahrzeuge GmbH, 80809 München (DE)
(72) Erfinder: KRABOT, Matyas, H-2310 Szigetszentmiklós (HU); SZIGETI, Lilla, H-4400 Nyiregyhaza (HU)
(86) Internationale Anmeldenummer: PCT/EP2015/066371
(87) Internationale Veröffentlichungsnummer: WO 2016/012354

(56) Entgegenhaltungen:
- DE-A1-102007 039 793
- US-A- 5 038 614

## Beschreibung

Die Erfindung betrifft ein Verfahren zur Identifikation einer Leckage in einem Druckluftsystem, bei welchem über im Bereich zwischen einem Einlassrückschlagventil einer systemeingangsseitigen Druckluftleitung und einem Arbeitsdruckspeicher angeordnete Sensormittel leckagebedingte Druckänderungen bestimmt werden. Ferner betrifft die Erfindung auch ein dieses Verfahren umsetzendes System zur Leckageidentifikation.

Das Einsatzgebiet der Erfindung erstreckt sich auf die Fahrzeugtechnik. Insbesondere bei Nutzfahrzeugen ist eine Leckageidentifikation im pneumatischen Bremssystem aus sicherheitstechnischen Gründen wünschenswert, um die Bremsfunktion des Fahrzeuges zu überwachen. Leckagen in Druckluftleitungen oder deren Verbindungen können hierüber unmittelbar erkannt und anschließend behoben werden.

Aus der DE 10 2008 009 306 A1 geht ein Verfahren zur Ermittlung und Lokalisierung einer Leckage in einem Druckluftsystem eines Fahrzeuges hervor, bei welchem in eine Druckluftleitung an einer ersten vorgebbaren Position ein erstes Mikrofon und an einer zweiten vorgebbaren Position ein zweites Mikrofon eingebracht werden, wobei anhand einer Laufzeitdifferenzmessung des Schalls von der Leckagestelle zum ersten Mikrofon und zum zweiten Mikrofon die Leckage lokalisiert wird. Bedingt durch die Laufzeitdifferenzmessung zwischen zwei Mikrofonen sind nur Leckagen identifizierbar, welche sich innerhalb des Abstandes zwischen den beiden Mikrofonen befinden.

Die DE 10 2007 039 793 A1 offenbart ein Verfahren zur Überwachung eines Druckluftsystems eines Fahrzeuges im Hinblick auf Leckagen, bei welchem durch eine Analyse von periodischen Schwankungen mindestens eines Anteils des Drucksignals eine Leckage im Druckluftsystem identifiziert, lokalisiert und/oder quantifiziert wird. Dies erfolgt hier vorzugsweise über einen Drucksensor, der gemäß eines Ausführungsbeispiels systemeingangsseitig angeordnet sein kann und die Druckverhältnisse innerhalb eines Schutzventils überwacht.

Die US 5,038,614 offenbart eine technische Lösung zur Identifikation einer Leckage in einem Druckluftsystem, welche auf zwei an einer Druckluftleitung angebrachten Sensoren basiert, die zumindest Axial- oder Torisonsschwingungen der Druckluftleitung erfassen. Die Signalverarbeitung der Schwingungssignale erfolgt durch Spektralanalyse und Fouriertransformation.

Es ist die Aufgabe der vorliegenden Erfindung mit einfachen technischen Mitteln eine zuverlässige Identifikation einer Leckagestelle in einem Druckluftsystem zu ermöglichen.

Die Aufgabe wird ausgehend von einem Verfahren gemäß dem Oberbegriff von Anspruch 1 in Verbindung mit dessen kennzeichnenden Merkmalen gelöst. Systemtechnisch wird die Aufgabe durch Anspruch 10 gelöst. Die jeweils rückbezogenen abhängigen Ansprüche geben vorteilhafte Weiterbildungen der Erfindung wieder.

Die Erfindung schließt die verfahrenstechnische Lehre ein, dass über eine elektronische Auswerteeinheit Frequenzänderungen des von Sensormitteln erzeugten Messsignals von leckagebedingten Druckänderungen in der Druckluftleitung als Maß für eine Leckage im Druckluftsystem ermittelt werden, welche zur Generierung einer Leckagemeldung benutz werden. Die Sensormittel sind dafür vorzugsweise systemeingangsseitig an der Druckluftleitung angeordnet. Es ist jedoch möglich, die Sensormittel im Arbeitsdruckspeicher des Druckluftsystems anzuordnen.

Ein Vorteil der Erfindung besteht in der schnellen Leckageerfassung. Es ist somit auch möglich, eine durch die erfindungsgemäße Lösung schnell ermittelte Leckage zur Ursacheneingrenzung zeitlich den kurz zuvor erfolgten Schaltzuständen des Druckluftsystems zuzuordnen.

Die Signalverarbeitung der die Druckänderungen in der Druckluftleitung repräsentierenden Messsignale erfolgt vorzugsweise über eine Gabor-Transformation, also über eine gefensterte Fourier-Transformation. Die beiden Eingänge der hierfür verwendeten Kurzzeit-Fourier-Transformation (STFT) sind insoweit zum einen mit dem Messsignal und zum anderen mit dem Gaussschen-Fenster belegt. Zunächst wird das Spektrogramm des Messsignals berechnet, welches vorzugsweise von einem Schallsensor oder einem Drucksensor als Sensormittel generiert wird. Zur Unterdrückung bekannter Störgrößen im Niederfrequenzbereich - verursacht von Motorschwingungen und dergleichen - wird der zu prüfende Frequenzbereich eingeschränkt. In den nächsten Schritten wird der Korrelationskoeffizient, vorzugsweise des Basis 10 Logarithmus der Spektrogrammwerte berechnet. In Abhängigkeit der gewünschten Größe der zu erkennenden Leckage sowie der Sensorempfindlichkeit wird ein Schwellwert für den geglätteten Korrelationskoeffizienten festgelegt, oberhalb dessen ein Leck erkannt wird.

Die elektronische Auswerteeinheit ermittelt auf diese Weise, ob eine Leckage im Druckluftsystem vorliegt. Die Bedingungen zur Meldung einer Leckage durch die elektronische Auswerteeinheit sind dann erfüllt, wenn im Vergleich zu dem Frequenzverlauf des Messsignals während des Normalbetriebs des Druckluftsystems gleichzeitige Frequenzstörungen im Messsignal über einen weiten Bandbereich von vorzugsweise mindestens 5 kHz ermittelt werden. Die Triggerbedingungen stellen im Prinzip die Störung über den kompletten zu prüfenden Frequenzbereich dar, wobei rechnerisch das Überschreiten des vorstehend beschriebenen Korrelationskoeffizienten bestimmt wird.

In Ergebnis der Leckageidentifikation kann die Leckagemeldung durch die elektronische Auswerteeinheit in Form einer Warnmeldung an den Fahrzeugführer direkt ausgegeben werden. Dieser ist hierdurch in der Lage, direkt auf eine gefährliche Leckagesituation zu reagieren, in dem das Fahrzeug eventuell unmittelbar angehalten wird. Alternativ und zusätzlich hierzu ist es auch möglich, die Leckagemeldung in Form einer Diagnosemeldung zur späteren Fahrzeugwartung hinsichtlich der Druckluftleitung und der hierin vorhandenen Druckluftverbindungen in einem elektronischen Diagnosespeicher zu hinterlegen. Durch Auslesen des elektronischen Diagnosespeichers in der Werkstatt kann eine gezielte Reparatur durchgeführt werden.

Die direkte Warnmeldung an den Fahrzeugführer oder die Hinterlegung im fahrzeuginternen Diagnosespeicher kann gemäß einer weiteren die Erfindung verbessernden Maßnahme in unterschiedlichen Dringlichkeitsstufen erfolgen. Hierdurch wird es möglich, das Fahrzeug bei beispielsweise nur geringfügigen Leckagen weiter in Betrieb zu behalten, falls sicherheitstechnische Kriterien dies zulassen. Andererseits können größere Leckagen mit hoher Dringlichkeit indiziert werden, so dass eine unmittelbare Stilllegung des Fahrzeugs eingeleitet werden kann.

Nach Behebung der Leckage durch eine geeignete Reparaturmaßnahme wird die Leckagemeldung durch die elektronische Auswerteeinheit vorzugsweise automatisch zurückgesetzt und es wird unmittelbar mit einer erneuten Leckageüberwachung begonnen.

Falls eine durch die erfindungsgemäße Lösung ermittelte Leckage im Druckluftsystem zur Ansteuerung der Druckluftzuführung benutzt werden soll, wird vorgeschlagen, entweder die Förderleistung des systemeingangsseitig angeschlossenen Kompressors zu erhöhen, um den leckagebedingten Druckverlust zu kompensieren; alternativ hierzu kann eine systemeingangsseitige Lufttrocknereinheit auch dahingehend angesteuert werden, dass die Regenerationsparameter der Druckluftanlage geändert werden, um trotz Leckage den nötigen Grad der Regeneration der Lufttrocknerpatrone zu gewährleisten.

Gemäß der Erfindung wird vorgeschlagen, dass die Identifikation einer Leckage durch die elektronische Auswerteeinheit ausgesetzt wird, solange sich der Luftverbrauch des Druckluftsystems in einem definierten Normalbereich befindet, welcher durch ein Fahrzeugkommunikationssystem an die elektronische Auswerteeinheit gemeldet wird. Als Fahrzeugkommunikationssystem kann hierfür ein meist ohnehin vorhandenes elektronisches Bussystem des Fahrzeugs verwendet werden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung eines Systems zur Identifikation einer Leckage in einem Druckluftsystem eines Fahrzeuges, und
- Figur 2: eine Blockschaltbilddarstellung der rechentechnischen Verfahrensschritte zur Leckageidentifikation.

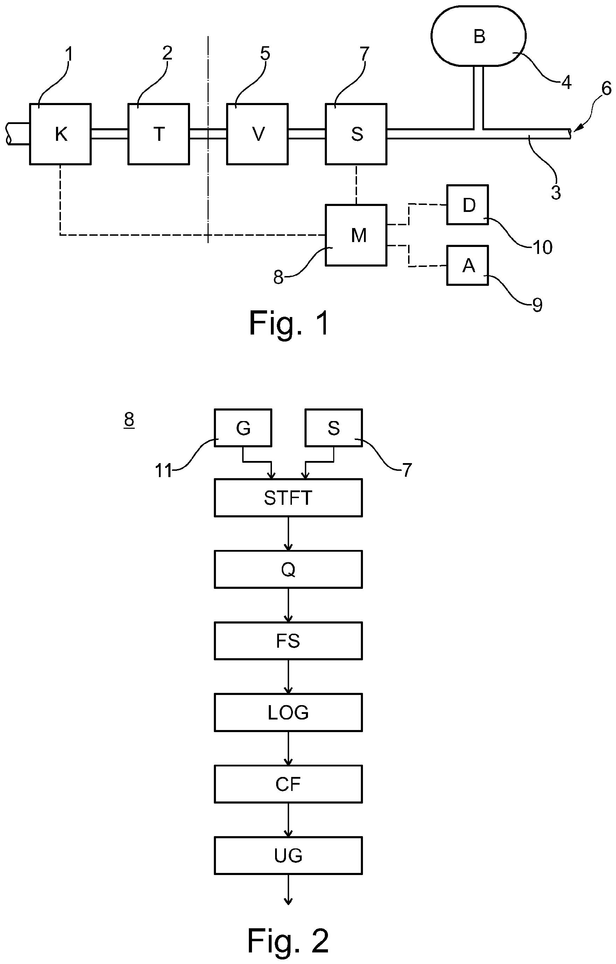

Gemäß Figur 1 wird ein Druckluftsystem eines - nicht weiter dargestellten - Fahrzeuges eingangsseitig ausgehend von einem Kompressor 1 über eine Lufttrocknereinheit 2 mit regenerierbarem Trockenmitteln durch eine Druckluftleitung 3 mit Druckluft versorgt. Das Druckluftsystem dient dem Betrieb eines pneumatischen Bremssystems und umfasst unter anderem einen über die Druckluftleitung 3 gespeisten Arbeitsdruckspeicher 4. Systemeingangsseitig ist die Druckluftleitung 3 mit einem Einlassrückschlagventil 5 versehen, um ein Rückströmen von Druckluft aus dem Arbeitsdruckspeicher 4 zurück an den Kompressor 1 zu vermeiden. Über einen Anschluss 6 der Druckluftleitung 3 können weitere - nicht dargestellte - Systemkomponenten, wie Ventile, Zylinder und andere Druckaggregate, an das Druckluftsystem angeschlossen werden.

Im Bereich zwischen dem Einlassrückschlagventil 5 und dem Arbeitsdruckspeicher 4 sind Sensormittel in Form eines Schallsensors 7 an der Druckluftleitung 3 angebracht. Der Schallsensor 7 misst die akustischen Schwingungen, welche durch die Fluidströmung in der Druckluftleitung 3 erzeugt werden und gibt diese in Form eines elektrischen Messsignals an die elektronische Auswerteeinheit 8 weiter. Die elektronische Auswerteeinheit 8 ermittelt eine Leckage im Druckluftsystem durch Auswertung von Frequenzänderungen im Messsignal des Schallsensors 7, welche charakteristisch sind für eine Leckagesituation, die sich vom Messsignal im Normalbetrieb des Druckluftsystems hinsichtlich des Frequenzspektrums unterscheidet.

Die in Ergebnis dessen von der elektronischen Auswerteeinheit 8 generierte Leckagemeldung wird über eine Anzeigeeinheit 9 dem Fahrzeugführer direkt optisch signalisiert. Die Anzeigeeinheit 9 befindet sich insoweit im Bereich des Führerstandes des Fahrzeuges und ist mit der elektronischen Auswerteeinheit 8 elektrisch verbunden. Darüber hinaus wird die Leckagemeldung auch in Form einer Diagnosemeldung in einem Diagnosespeicher 10 des Fahrzeuges hinterlegt. Der Diagnosespeicher 10 kann im Rahmen einer späteren Fahrzeugwartung hinsichtlich des Druckluftsystems in an sich bekannter Weise ausgelesen werden.

Die Leckagemeldung wird je nach Leckagegröße in unterschiedlichen Dringlichkeitsstufen ausgegeben, beispielsweise geringe Leckage mit Anzeige und Abspeicherung eines mittelfristigen Wartungsbedarfs bis hin zu großer Leckage mit Anzeige und Abspeicherung eines unmittelbaren Reperaturbedarfs des Druckluftsystems. Nach Behebung der Leckage wird die Leckagemeldung durch die elektronische Auswerteeinheit 8 rückgesetzt, so dass diese wieder in den Modus einer normalen Leckageüberwachung gebracht wird.

Gemäß Figur 2 erfolgt die Identifikation der Leckage in dem Druckluftsystem innerhalb der elektronischen Auswerteeinheit 8, indem im Rahmen einer Kurzzeit-Fourier-Transformation STFT in Form einer Garbor-Transformation die beiden Eingangssignale in Form des Messsignals des Schallsensors 7 und eines Gaussschen Fensters 11 signalverarbeitet werden.

Anschließend wird in einem Rechenschritt Q das Spektrogramm durch Quadratur der Garbor-Transformation ermittelt. Dann wird in dem Schritt einer Frequenzselektion (FS) der überwachte Frequenzbereich auf einen spezifischen Bereich begrenzt, um eine Störung im niedrigen Frequenzbereich des Messsignals durch Schwingungen von Fahrzeugkomponenten, wie Motor, Bremsanlage und dergleichen zu eliminieren.

Im weiteren Schritt LOG erfolgt eine Berechnung des Basis-10-Logarithmus, um die Unterschiede zwischen den Spektrogrammwerten aus dem Signalverlauf hervorzuheben. Im anschließenden Verfahrensschritt der Anwendung eines Korrelationsfaktors CF werden zufällige Spitzen aus dem Signalverlauf eliminiert, um eine untere Nachweisgrenze UG zu definieren. Die untere Nachweisgrenze UG ist zur Generierung der Leckagemeldung zu definieren, um erst ab einem bestimmten Grenzwert eine Auswertung der vorangegangen analysierten Frequenzänderungen als tatsächliche Leckage im Druckluftsystem vorzunehmen. Der Grenzwert ist dabei in Abhängigkeit zur Mindest-Leckagegröße zu bemessen, welche als Meldung ausgegeben werden soll. Die untere Nachweisgrenze UG ist abhängig von der Messempfindlichkeit sowie der Leistung der Sensormittel. Wenn der geglättete Korrelationskoeffizient CF größer ist als die untere Nachweisgrenze UG, dann wird eine Leckagemeldung ausgegeben, anderenfalls nicht.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, anstelle des an eine Druckluftleitung angebrachten Schallsensors als Sensormittel zur Detektion einer Leckage auch einen an die Druckleitung angebrachten Drucksensor hierfür zu verwenden, sofern dieser in der Lage ist, ein Frequenzspektrum der erfindungsgegenständlichen Art als Messsignal zu erzeugen.

### Bezugszeichenliste

- 1: Kompressor
- 2: Lufttrockner
- 3: Druckluftleitung
- 4: Arbeitsspeicher
- 5: Rückschlagventil
- 6: Anschluss für weitere Systemkomponenten
- 7: Schallsensor
- 8: Elektronische Auswerteeinheit
- 9: Anzeigeeinheit
- 10: Gausssches Fenster

- STFT: Kurzzeit-Fourier-Transformation
- Q: Quadratur
- FS: Frequenzselektion
- LOG: Logarithmierung
- CF: Korrellationskoeffizient
- UG: untere Nachweisgrenze

## Patentansprüche

1. Verfahren zur Identifikation einer Leckage in einem Druckluftsystem eines Fahrzeuges, bei welchem über im Bereich zwischen einem Einlassrückschlagventil (5) einer systemeingangsseitigen Druckluftleitung (3) und einem Arbeitsdruckspeicher (4) angeordneten Sensormittel (7) leckagebedingte Druckänderungen bestimmt werden, wobei über eine elektronische Auswerteeinheit (8) Frequenzänderungen eines vom Sensormittel (7) erzeugten Messsignals als Maß für eine Leckage im Druckluftsystem ermittelt werden, welche zur Generierung einer Leckagemeldung benutzt werden,
**dadurch gekennzeichnet, dass** die Identifikation einer Leckage durch die elektronische Auswerteeinheit (8) ausgesetzt wird, solange sich der Luftverbrauch in einem definierten Normalbereich befindet, welcher durch ein Fahrzeugkommunikationssystem an die elektronische Auswerteeinheit (8) gemeldet wird.

2. Verfahren nach Anspruch 1,
**dadurch gekennzeichnet, dass** die Bedingungen zur Meldung einer Leckage durch die elektronische Auswerteeinheit (8) dann erfüllt sind, wenn im Vergleich zu dem Frequenzverlauf des Messsignals während des Normalbetriebs des Druckluftsystems gleichzeitige Frequenzstörungen im Messsignal über eine Bandbreite von mindestens 5 kHz ermittelt werden.

3. Verfahren nach Anspruch 1,
**dadurch gekennzeichnet, dass** die Bedingungen zur Meldung einer Leckage durch die elektronische Auswerteeinheit (8) dann erfüllt sind, wenn ein geglätteter Korrelationskoeffizient des Messsignals größer als ein definierter Schwellwert ist.

4. Verfahren nach Anspruch 1,
**dadurch gekennzeichnet, dass** die Leckagemeldung durch die elektronische Auswerteeinheit (8) in Form einer Warnmeldung an den Fahrzeugführer direkt ausgegeben wird.

5. Verfahren nach Anspruch 1,
**dadurch gekennzeichnet, dass** die Leckagemeldung durch die elektronische Auswerteeinheit (8) in Form einer Diagnosemeldung zur späteren Fahrzeugwartung hinsichtlich der Druckluftleitung und der hierin vorhandenen Druckluftverbindungen in einen Diagnosespeicher (10) gespeichert wird.

6. Verfahren nach Anspruch 4 oder 5,
**dadurch gekennzeichnet, dass** die Leckagemeldung je nach Leckagegröße in unterschiedlichen Dringlichkeitsstufen ausgegeben wird.

7. Verfahren nach Anspruch 1,
**dadurch gekennzeichnet, dass** die elektronische Auswerteeinheit (8) nach Behebung der Leckage die Leckagemeldung rückgesetzt wird.

8. Verfahren nach Anspruch 1,
**dadurch gekennzeichnet, dass** zur Ansteuerung der Druckluftzuführung ein an die systemeingangsseitige Druckluftleitung (3) angeschlossener Kompressor (1) die Förderleistung erhöht.

9. Verfahren nach Anspruch 1,
**dadurch gekennzeichnet, dass** zur Ansteuerung der Druckluftzuführung eine an die systemeingangsseitige Druckluftleitung (3) angeschlossene Lufttrocknereinheit (2) Regenerationsparameter des Trockenmittels ändert.

10. System zur Identifikation einer Leckage in einem Druckluftsystem eines Fahrzeuges, bei welchem im Bereich zwischen einem Einlassrückschlagventil (5) einer systemeingangsseitigen Druckluftleitung (3) und einem Arbeitsdruckspeicher (4) angeordnete Sensormittel (7) leckagebedingte Druckänderungen ermitteln, wobei eine elektronische Auswerteeinheit (8) ausgebildet ist, um Frequenzänderungen des vom Sensormittel (7) erzeugten Messsignals als Maß für eine Leckage im Druckluftsystem zu ermitteln, um eine Leckagemeldung zu generieren,
**dadurch gekennzeichnet, dass** die Identifikation einer Leckage durch die elektronische Auswerteeinheit (8) ausgesetzt wird, solange sich der Luftverbrauch in einem definierten Normalbereich befindet, welcher durch ein Fahrzeugkommunikationssystem an die elektronische Auswerteeinheit (8) gemeldet wird.

11. System nach Anspruch 10,
**dadurch gekennzeichnet, dass** die Sensormittel als mindestens ein Drucksensor oder Schallsensor (7) ausgebildet sind.

## Claims

1. Method for identifying a leak in a compressed air system of a vehicle, in which leak-induced pressure changes are determined using sensor means (7) arranged in the region between an inlet non-return valve (5) of a system-input-side compressed air line (3) and a working pressure accumulator (4), frequency changes in a measurement signal generated by the sensor means (7) being determined as a measure of a leak in the compressed air system by means of an electronic evaluation unit (8), which frequency changes are used to generate a leak message,
**characterized in that** the identification of a leak by means of the electronic evaluation unit (8) is suspended as long as the consumption of air is in a defined normal range, which is signaled to the electronic evaluation unit (8) by means of a vehicle communication system.

2. Method according to Claim 1,
**characterized in that** the conditions for signaling a leak by means of the electronic evaluation unit (8) are satisfied when, in comparison with the frequency profile of the measurement signal during the normal operation of the compressed air system, simultaneous frequency interference is determined in the measurement signal over a bandwidth of at least 5 kHz.

3. Method according to Claim 1,
**characterized in that** the conditions for signaling a leak by means of the electronic evaluation unit (8) are satisfied when a smoothed correlation coefficient of the measurement signal is greater than a defined threshold value.

4. Method according to Claim 1,
**characterized in that** the leak message is output directly in the form of a warning message to the vehicle driver by means of the electronic evaluation unit (8).

5. Method according to Claim 1,
**characterized in that** the leak message is stored by means of the electronic evaluation unit (8) in the form of a diagnostic message relating to the later maintenance of the vehicle with respect to the compressed air line and the compressed air connections present therein, in a diagnostic memory (10).

6. Method according to Claim 4 or 5,
**characterized in that** the leak message is output at different urgency levels depending on the magnitude of the leak.

7. Method according to Claim 1,
**characterized in that** the electronic evaluation unit (8) is reset the leak message after elimination of the leak.

8. Method according to Claim 1,
**characterized in that**, in order to actuate the supply of compressed air, a compressor (1) which is connected to the system-input-side compressed air line (3) increases the delivery capacity.

9. Method according to Claim 1,
**characterized in that**, in order to actuate the supply of compressed air, an air dryer unit (2) which is connected to the system-input-side compressed air line (3), changes regeneration parameters of the desiccant.

10. System for identifying a leak in a compressed air system of a vehicle, in which sensor means (7) arranged in the region between an inlet non-return valve (5) of a system-input-side compressed air line (3) and a working pressure accumulator (4) determine leak-induced pressure changes, an electronic evaluation unit (8) being designed to determine frequency changes in the measurement signal generated by the sensor means (7) as a measure of a leak in the compressed air system, in order to generate a leak message,
**characterized in that** the identification of a leak by means of the electronic evaluation unit (8) is suspended as long as the consumption of air is in a defined normal range, which is signaled to the electronic evaluation unit (8) by means of a vehicle communication system.

11. System according to Claim 10,
**characterized in that** the sensor means are embodied as at least one pressure sensor or sound sensor (7).

## Revendications

1. Procédé d'identification d'une fuite dans un système à air comprimé d'un véhicule, dans lequel des variations de pression dues à une fuite sont déterminées par des moyens (7) de capteur montés entre un clapet (5) antiretour d'entrée d'un conduit (3) pour de l'air comprimé du côté de l'entrée du système et un accumulateur (4) de pression de travail, dans lequel on détermine, comme mesure d'une fuite dans le système à air comprimé, par une unité (8) électronique d'exploitation, des variations de fréquence d'un signal de mesure produit par le moyen (7) de capteur, qui sont utilisées pour produire une indication de fuite,
**caractérisé en ce que** l'on suspend l'identification d'une fuite par l'unité (8) électronique d'exploitation tant que la consommation d'air se trouve dans une plage normale définie indiquée à l'unité (8) électronique d'exploitation par un système de communication du véhicule.

2. Procédé suivant la revendication 1,
**caractérisé en ce que** les conditions d'indication d'une fuite par l'unité (8) électronique d'exploitation sont satisfaites si, par rapport à la courbe de fréquence du signal de mesure pendant le fonctionnement normal du système à air comprimé, on détermine des perturbations de fréquence simultanées du signal de mesure sur une largeur de bande d'au moins 5 kHz.

3. Procédé suivant la revendication 1,
**caractérisé en ce que** les conditions d'indication d'une fuite par l'unité (8) électronique d'exploitation sont satisfaites si un coefficient de corrélation lissé du signal de mesure est plus grand qu'une valeur de seuil définie.

4. Procédé suivant la revendication 1,
**caractérisé en ce que** l'indication d'une fuite est envoyée directement au conducteur du véhicule par l'unité (8) électronique de commande, sous la forme d'une indication d'avertissement.

5. Procédé suivant la revendication 1,
**caractérisé en ce que** l'annonce de fuite, par l'unité (8) électronique de commande, est mémorisée dans une mémoire de diagnostic, sous la forme d'une annonce de diagnostic pour l'entretien ultérieur du véhicule en ce qui concerne le conduit pour l'air comprimé et les liaisons pour l'air comprimé qui y sont présentes.

6. Procédé suivant la revendication 4 ou 5,
**caractérisé en ce que** le message de fuite est émis suivant l'importance de la fuite en des degrés d'urgence différents.

7. Procédé suivant la revendication 1,
**caractérisé en ce que** le message de fuite est remis à zéro par l'unité (8) électronique d'exploitation après suppression de la fuite.

8. Procédé suivant la revendication 1,
**caractérisé en ce que**, pour commander l'envoi d'air comprimé, un compresseur (1), raccordé au conduit (3) pour de l'air comprimé du côté de l'entrée du système, augmente le débit.

9. Procédé suivant la revendication 1,
**caractérisé en ce que**, pour commander l'envoi d'air comprimé, une unité (2) de sécheur d'air, raccordée au conduit (3) pour de l'air comprimé du côté de l'entrée du système, modifie un paramètre de régénération de l'agent de dessiccation.

10. Système d'identification d'une fuite dans un système à air comprimé d'un véhicule, dans lequel des moyens (7) de capteur, montés entre un clapet (5) antiretour d'entrée d'un conduit (3) pour de l'air comprimé du côté de l'entrée du système et un accumulateur (4) de pression de travail, déterminent des variations de pression dues à une fuite, une unité (8) électronique d'exploitation étant constituée pour déterminer des variations de fréquence du signal de mesure produit par le moyen (7) de capteur, comme mesure d'une fuite dans le système à air comprimé, afin de produire une indication d'une fuite, **caractérisé en ce que** l'identification d'une fuite par l'unité (8) électronique d'exploitation est suspendue tant que la consommation d'air se trouve dans une plage normale définie, qui est indiquée à l'unité (8) électronique d'exploitation par un système de communication du véhicule.

11. Système suivant la revendication 10,
**caractérisé en ce que** les moyens de capteur sont constitués sous la forme d'au moins un capteur de pression ou un capteur (7) acoustique.
